# EUROPÄISCHE PATENTSCHRIFT

(11) **EP 0 680 420 B1**
(45) Veröffentlichungstag und Bekanntmachung des Hinweises auf die Patenterteilung: **09.07.1997**
(21) Anmeldenummer: 94928885.6
(22) Anmeldetag: 10.10.1994
(51) Int. Cl.: B60R 11/04

(54) **VORRICHTUNG ZUR HALTERUNG EINER KAMERA**
DEVICE FOR HOLDING A CAMERA
DISPOSITIF DE MAINTIEN D'UNE CAMERA

(30) Priorität: 26.11.1993 DE 9318170 U
(43) Veröffentlichungstag der Anmeldung: 08.11.1995
(73) Patentinhaber: BRITISH AEROSPACE PUBLIC LIMITED COMPANY, Farnborough, Hants. GU14 6YU (GB)
(72) Erfinder: KROKER, Gerhard, D-82234 Wessling (DE); BUHN, Hellmuth, D-85305 Jetzendorf (DE)
(74) Vertreter: Pätzold, Herbert, Dr.-Ing.
(86) Internationale Anmeldenummer: EP9403339
(87) Internationale Veröffentlichungsnummer: WO9514591

(56) Entgegenhaltungen:
- EP-A- 0 128 312
- EP-A- 0 196 247
- US-A- 4 815 757

## Beschreibung

Die Erfindung bezieht sich auf eine Vorrichtung zur Halterung einer Kamera gemäß den Merkmalen des Oberbegriffes des Anspruches 1.

Es ist bekannt, eine Kamera auf dem Dach eines Fahrzeuges in einer bestimmten Höhe anzubringen, um die Umgebung aufzunehmen bzw. zu beobachten oder zu überwachen. Der Aufbau der Kamera auf einem Fahrzeugdach, die in einer vorbestimmten Höhe oberhalb des Niveaus des Fahrzeugdaches gehalten werden muß, ist konstruktiv aufwendig. Außerdem ist der Aufbau der Kamera auf dem Fahrzeugdach umständlich und läßt sich in der Dunkelheit ohne Beleuchtung nicht sicher und schnell durchfuhren.

Es sind daher schon Spezialfahrzeuge vorgeschlagen worden, die im Fahrzeugdach eine verschließbare Öffnung aufweisen, durch die die Kamera an einem ausfahrbaren Gestänge auf eine bestimmte Beobachtungshöhe oberhalb des Fahrzeugdaches teleskopartig ausfahrbar ist. Der technische Aufwand für ein solches Spezialfahrzeug und das zugehörige ausfahrbare Gestänge ist erheblich.

Eine derartige, gattungsbildende, Vorrichtung ist aus EP-A-0 128 312 bekannt.

Aufgabe der Erfindung ist es, eine Vorrichtung der eingangs genannten Art anzugeben, die es erlaubt, die Kamera in einer ersten Stellung sicher im Fahrzeug zu verstauen und in einer zweiten Stellung in einem vorbestimmten Abstand oberhalb des Daches des Fahrzeuges zu halten, wobei ein herkömmliches Fahrzeug insbesondere ein Kombifahrzeug, ohne wesentliche Änderungen verwendbar ist. Insbesondere sollen Heck- und/oder Seitentüren des Fahrzeuges unverändert benutzbar sein und es soll keinen Durchbruch im Fahrzeugdach erforderlich sein, durch die die Kamera auf die erforderliche Höhe nach außen geführt werden kann. Die Vorrichtung zur Halterung der Kamera soll dabei so ausgebildet sein, daß die Kamera mit wenigen Handgriffen ohne Beleuchtung auch bei Nacht aus dem Fahrzeug heraus sicher in ihre Arbeitsstellung oberhalb des Dachniveaus des Fahrzeuges gebracht werden kann. Auf diese Weise soll das Fahrzeug mit einer Infrarotlichtkamera auch bei Nacht zur Überwachung von Grenzen durch Grenzschutzbeamte oder zur Aufsuchung und/oder Verfolgung von Personen, Tieren und Gegenständen verwendbar sein, wobei die Kamera bei Nacht am Beobachtungsort aus dem Fahrzeug heraus rasch und unauffällig in ihre Arbeitsstellung gebracht werden kann.

Die Aufgabe wird erfindungsgemäß mit den kennzeichnenden Merkmalen des Anspruches 1 gelöst. Vorteilhafte Ausführungen nach der Erfindung ergeben sich aus den Merkmalen der Unteransprüche und/oder der nachfolgenden Beschreibung für ein Ausführungsbeispiel, das in der Zeichnung nur schematisch dargestellt ist. Hierzu zeigt
- Figur 1: eine Ansicht der erfindungsgemäßen Vorrichtung in einer ersten Stellung; und
- Figur 2: die Vorrichtung nach Fig. 1 in einer zweiten Stellung.

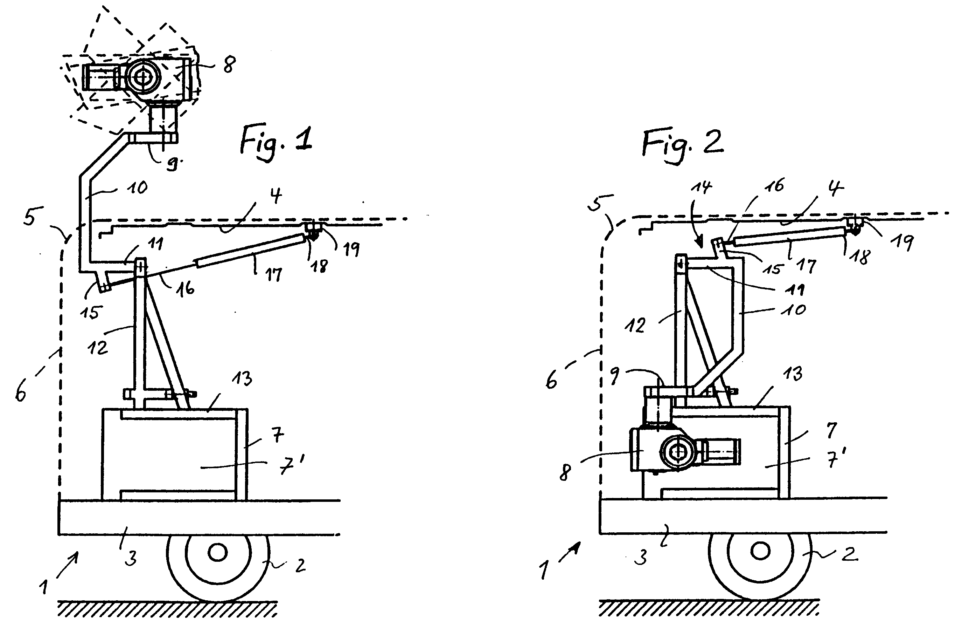

In den Fig. 1 und 2 ist der hintere Teil eines Kombifahrzeuges in der Seitenansicht mit 1 bezeichnet. Von dem Fahrzeug 1 ist lediglich ein Hinterrad 2 mit einem Bodenteil 3 und einem gegenüberliegenden Dachteil 4 dargestellt. Die gestrichelte Linie 5 deutet den Umriß des hinteren Endes des Fahrzeuges an, das an seiner Rückseite 6 in bekannter Weise z.B. eine zweiflügelige Hecktür aufweisen kann.

Innerhalb des Fahrzeuges 1 ruht auf dem Fahrzeugboden 3 nahe der Hecktür eine Tragkonstruktion 7, die einen zur Hecktür hin stirnseitig offenen Raum 7' umschließt, in den eine Kamera 8 bodennahe verstaubar und dort in ihrer Lage stabilisierbar ist. Dabei ist die Kamera an einer Plattform 9 gehalten, die Teil eines bügelartigen Gestänges 10 ist, das einen starren Träger für die Kamera 8 bildet. Das Gestänge 10 ist an seinem von der Kamera 8 abgewandten Ende 11 am oberen Ende eines bockartigen Gestells 12 verschwenkbar gelagert, das auf der Oberseite 13 der Tragkonstruktion 7 ruht, die mit dem Fahrzeugboden 3 fest verbindbar ist. Nahe dem lagerseitigen Gestängeende 11 ist zur Bildung eines Kurbeltriebes 14 ein kurzer Hebelarm 15 fest angebracht, an dem zum Ausgleich des relativ schweren Gewichtes der Kamera 8 das eine Ende 16 eines Kraftspeichers 17 gelenkig angebracht ist, dessen anderes Ende 18 an einem Festpunkt 19 gelenkig anschließt, der z.B. am Fahrzeugdach 4 befestigt ist.

Am Gehäuse der Kamera 8 befindet sich ein nicht dargestellter Griff zum Herausschwenken aus der im Fahrzeug verstauten Stellung gemäß Fig. 2. Unterstützt durch den Kraftspeicher 17 wird nach Überwindung eines Anfangsschwenkwinkels das bügelartige Gestänge 10 mit der Kamera 8 bei geöffneter Hecktür weitgehend selbsttätig in die Stellung gemäß Fig. 1 verschwenkt. Die Kamera 8 befindet sich dabei oberhalb des Fahrzeugdaches in ihrer vorbestimmten Arbeitsstellung, in der sie über bekannte fernsteuerbare Getriebe in gewünschte Richtungen steuerbar ist, wie die gestrichelten Linien andeuten.

Das Einschwenken der Kamera 8 aus der Stellung in Fig. 1 in die im Fahrzeug sicher verstaute Stellung in Fig. 2 ist entsprechend einfach mit wenigen Handgriffen möglich, wobei das Gewicht der abwärts schwenkenden Kamera durch den entsprechend ausgelegten Kraftspeicher 17 sicher gedämpft wird, um die Kamera schonend in die Stellung nach Fig. 2 bringen zu können.

Der Kraftspeicher 17 kann z.B. ein bekannter Gasdruckdämpfer sein. Es kann sich aber auch um eine mechanische Federeinrichtung handeln. Im Beispielsfalle ist das freie Ende 16 der Kolbenstange des Gasdruckdämpfers am Hebellarm 15 des Gestänges 10 und das gegenüberliegende Ende 18 des Zylinders des Gasdruckdämpfers am Festpunkt 19 jeweils gelenkig angebracht.

Die Kamera 8 läßt sich erfindungsgemäß sicher in einem herkömmlichen Fahrzeug, insbesondere einem Kombifahrzeug verstauen. Auch im Dunkeln läßt sich die Kamera mit wenigen blind vornehmbaren Handgriffen bei geöffneter Fahrzeugtür aus der verstauten Stellung in die Beobachtungsstellung oberhalb des Fahrzeugdaches verschwenken. Es bedarf hierzu bei Nacht keiner Beleuchtung, wodurch das Ausspähen von Personen und Tieren erschwert werden kann.

Die Erfindung ist nicht auf das Ausführungsbeispiel beschränkt, bei der die betriebsbereite Kamera 8 bei geöffneter Hecktür aus dem Fahrzeug herausgeschwenkt und in das Fahrzeug Zurückgeschwenkt wird. So kann die Kamera auch aus einer Seitentür eines Kombiwagens entsprechend heraus- und in den Kombiwagen zurückschwenkbar sein.

Der Raumaufwand zur Aufnahme der Kamera innerhalb des Fahrzeuges nahe einer Tür ist relativ klein, so daß der übrige Innenraum des Fahrzeuges als Arbeitsraum für mindestens eine die Kamera bedienende Person verwendet werden kann.

Die Erfindung ist nicht auf die gezeigte Ausführung des bügelartigen Gestänges mit dem Stauraum für die Kamera und das Gestell zur Verschwenkung des Gestells in Verbindung mit dem Kraftspeicher beschränkt. Dem Fachmann bieten sich ohne weiteres wirkungsgleiche Alternativen an, die im Rahmen der Erfindung liegen.

Vorteilhafterweise bildet das Gestänge 10 mit der Tragkonstruktion 7, dem Gestell 12 und dem Kraftspeicher 17 eine Baueinheit, die in herkömmliche Fahrzeuge mit minimalem Aufwand leicht eingebracht und bodenseitig festgelegt werden kann, wobei lediglich z.B. dachseitig der Festpunkt 19 für den Kraftspeicher angebracht werden muß. Der Festpunkt kann sich aber auch an einem speziellen Träger befinden, der verlängerter Teil des Gestells 12 sein kann und mit diesem eine Baueinheit bilden kann. Besonders vorteilhaft ist, daß die Türen der Fahrzeuge nach Unterbringen der Kamera im Fahrzeug in herkömmlicher Weise geschlossen werden können, ohne daß an den Türen wesentliche bauliche Veränderungen vorgenommen werden müßten. Vorteilhaft ist auch, daß die komplette Baueinheit aus dem Gestell 12, der Tragkonstruktion 7 und dem Gestänge 10 mit dem angeschlossenen Kraftspeicher 17 in jedes geeignete Fahrzeug, insbesondere Kombifahrzeug mit geringem Aufwand eingebaut werden kann. Solche Fahrzeuge lassen sich auch zur Aufnahme der obigen Baueinheit leicht nachrüsten, ohne daß aufwendige Änderungen am Fahrzeuggehäuse vorgenommen werden müßten.

Es ist klar, daß das Verschwenken der Kamera auch mit einem hand- oder motorbetriebenen Kurbelgetriebe vorgenommen werden kann, das z.B. anstelle des Kraftspeichers 17 an dem Hebelarm 15 angreift.

## Patentansprüche

1. Vorrichtung zur Halterung einer Kamera in ihrer Arbeitsstellung oberhalb des Dachniveaus eines Fahrzeuges,
**dadurch gekennzeichnet**
daß die Kamera (8) am einen Ende (9) eines starren Trägers (10) gehalten ist, der an seinem anderen Ende (11) an einem im Fahrzeug (1) festgelegten Gestell (12) verschwenkbar gehalten ist, wobei die Kamera aus einer im Fahrzeug (1) hinter einer Tür sicher verstauten Stellung bei geöffneter Tür in ihre Arbeitsstellung und zurück bewegbar ist.

2. Vorrichtung nach Anspruch 1, dadurch gekennzeichnet, daß an den Trägers (10) zu seiner Verschwenkung ein Kurbelgetriebe angreift.

3. Vorrichtung nach Anspruch 2, dadurch gekennzeichnet, daß zum Gewichtsausgleich der Kamera (8) wenigstens ein Kraftspeicher (17) vorgesehen ist, der mit seinem einen Ende (16) gelenkig an einem Hebelarm (15) am Träger angreift, und der mit seinem anderen Ende (18) an einem Festpunkt (19) im Fahrzeug gelenkig abgestützt ist.

4. Vorrichtung nach Anspruch 3, dadurch gekennzeichnet, daß der Kraftspeicher (17) als Gas- oder Hydraulikdruckdämpfer ausgebildet ist.

5. Vorrichtung nach Anspruch 3 oder 4, dadurch gekennzeichnet, daß der Festpunkt (19) des Kraftspeichers (17) an einem Fahrzeugteil oder an einem mit dem Gestell (12) in Verbindung stehenden Träger angeordnet ist.

6. Vorrichtung nach einem der vorstehenden Ansprüche, dadurch gekennzeichnet, daß das Fahrzeug (1) ein herkömmliches Kombifahrzeug mit Heck- und/oder Seitentür ist und daß der Stauraum (7') für die Kamera (8) boden- und schwerpunktnahe nahe der geschlossenen Heck- oder Seitentür angeordnet ist.

7. Vorrichtung nach einem der vorstehenden Ansprüche, dadurch gekennzeichnet, daß der Träger (10) aus einem bügelartigen Gestänge besteht, dessen freies Ende (9) als Plattform zur Halterung der Kamera (8) ausgebildet ist, wobei die Plattform in der Aufnahmestellung der Kamera (8) etwa waagerecht oberhalb des Fahrzeugdaches (4) und in der verstauten Stellung der Kamera (8) innerhalb des Fahrzeuges bodennahe etwa waagerecht zum Fahrzeugboden verläuft.

8. Vorrichtung nach Anspruch 7, dadurch gekennzeichnet, daß die Kamera (8) in der verstauten Stellung in einem ausgesparten Raum einer Tragkonstruktion (7) hineinragt, die nach oben von einem Deckenwandabschnitt (13) begrenzt ist, auf dem das bockartig ausgebildete Gestell (12) ruht, an dessen oberen Ende unterhalb des Fahrzeugdaches (4) das Lager zur Verschwenkung der Tragvorrichtung (10) angeordnet ist.

9. Vorrichtung nach einem der vorstehenden Ansprüche, dadurch gekennzeichnet, daß der Träger (10) mit der Plattform (9) zur Aufnahme der Kamera (8), das Gestell (12) mit der Tragkonstruktion (7) und der Kraftspeicher 17 mit oder ohne dem Festpunkt (19) eine Baueinheit bilden, die auf dem Fahrzeugboden türnahe verankerbar ist.

10. Vorrichtung nach Anspruch 2, dadurch gekennzeichnet, daß der Hebelarm (15) von einem kurzen Ansatz am Träger (10) gebildet ist, der nahe dem Schwenkpunkt des Trägers sich zur einen von der Kamera abgewandten Seite des Trägers nach außen erstreckt.

## Claims

1. Device for holding a camera in its working position above the roof level of a vehicle,
**characterised in that**
the camera (8) is held at one end (9) of a rigid carrier (10) which is movably held at its other end (11) on a stand (12) fixed in the vehicle (1), the camera being capable of being moved out of a position securely stowed away in the vehicle (1) behind a door into its working position and back when the door is opened.

2. Device according to claim 1**, characterised in that** a crank mechanism engages with the carrier (10) in order to move it.

3. Device according to claim 2, **characterised in that** at least one energy storing device (17) is provided to counterbalance the weight of the camera (8), one end (16) of which device articulating with a lever arm (15) on the carrier, and the other end (18) of which is supported hinged to a fixed point (19) in the vehicle.

4. Device according to claim 3, **characterised in that** the energy storing device is designed as a gas or hydraulic pressure damper.

5. Device according to claim 3 or 4 **characterised in that** the fixed point (19) of the energy storing device (17) is disposed on a part of the vehicle or on a carrier connected to the stand (12).

6. Device according to one of the preceding claims, **characterised in that** the vehicle (1) is a traditional estate car with rear and/or side door and that the stowage space (7') for the camera (8) is disposed close to the ground and the centre of gravity and near to the closed rear or side door.

7. Device according to one of the preceding claims, **characterised in that** the carrier (10) consists of a strap-like rod assembly the free end (9) of which is designed as a platform for holding the camera (8), the platform running approximately horizontally above the vehicle roof (4) when the camera (8) is in filming position and approximately horizontal to the floor of the vehicle when the camera (8) is in stowed-away position inside the vehicle.

8. Device according to claim 7, **characterised in that** in its stowed-away position the camera (8) projects into a recessed space of a support structure (7) which is delimited upwards by a covering wall section (13) on which the trestle-shaped stand (12) rests, and the bearing for swivelling the carrying device (10) is arranged at the upper end of this stand below the vehicle roof (4).

9. Device according to one of the preceding claims, **characterised in that** the carrier (10) with the platform (9) for receiving the camera (8), the stand (12) with the support structure (7) and the energy storing device 17 with or without the fixed point (19) form a constructional unit which can be anchored to the floor of the vehicle near the door.

10. Device according to claim 2, **characterised in that** the lever arm (15) is formed by a short projection on the carrier (10) which extends outwards close to the swivelling point of the carrier to a side of the carrier turned away from the camera.

## Revendications

1. Dispositif de maintien d'une caméra dans sa position de travail au-dessus du niveau du toit d'un véhicule,
caractérisé
en ce que la caméra (8) est maintenue à une extrémité (9) d'un support (10) rigide qui, à son autre extrémité (11), est maintenu, de façon à pouvoir basculer, sur un bâti (12) fixé dans le véhicule (1), tandis qu'il est possible, en ouvrant une porte, de déplacer la caméra d'une position abritée d'une manière sûre dans le véhicule (1), derrière la porte, à une position de travail et en sens inverse.

2. Dispositif selon la revendication 1, caractérisé en ce qu'un mécanisme articulé attaque le support (10) en vue de son basculement.

3. Dispositif selon la revendication 2, caractérisé en ce que, pour équilibrer le poids de la caméra (8), il est prévu au moins un accumulateur d'énergie (17) qui, par une première extrémité (16), attaque d'une manière articulée un bras de levier (15) situé sur le support et qui, par son autre extrémité (18), prend appui d'une manière articulée sur un point fixe (19) dans le véhicule.

4. Dispositif selon la revendication 3, caractérisé en ce que l'accumulateur d'énergie (17) est réalisé sous forme d'un amortisseur à gaz comprimé ou à pression hydraulique.

5. Dispositif selon la revendication 3 ou 4, caractérisé en ce que le point fixe (19) de l'accumulateur d'énergie (17) est disposé sur une partie de véhicule ou sur un support en liaison avec le bâti (12).

6. Dispositif selon l'une des revendications précédentes, caractérisé en ce que le véhicule (1) est une fourgonnette classique à porte arrière et/ou porte latérale et en ce que l'espace (7') servant à abriter la caméra (8) est disposé au voisinage de la porte arrière ou porte latérale fermée, près du plancher et du centre de gravité.

7. Dispositif selon l'une des revendications précédentes, caractérisé en ce que le support (10) est constitué d'un châssis allongé en forme d'étrier dont l'extrémité libre (9) est agencée en forme de plate-forme servant à maintenir la caméra (8), la plate-forme s'étendant d'une manière approximativement horizontale au-dessus du toit de véhicule (4) dans la position de prise de vues de la caméra (8) et s'étendant d'une manière approximativement horizontale vis-à-vis du plancher de véhicule, à l'intérieur du véhicule et près du plancher, dans la position abritée de la caméra (8).

8. Dispositif selon la revendication 7, caractérisé en ce que, dans la position abritée, la caméra (8) pénètre dans un espace creux d'une structure porteuse (7) qui est délimitée vers le haut par une section de paroi de recouvrement (13) sur laquelle repose le bâti (12), réalisé en forme de chevalet, à l'extrémité supérieure duquel est disposée, au-dessous du toit de véhicule (4), le palier servant au basculement du dispositif porteur (10).

9. Dispositif selon l'une des revendications précédentes, caractérisé en ce que le support (10), avec la plate-forme (9) servant à recevoir la caméra (8), le bâti (12), avec la structure porteuse (7), et l'accumulateur d'énergie (17), avec ou sans le point fixe (19), forment un ensemble structurel unitaire qui peut être ancré au plancher du véhicule au voisinage de la porte.

10. Dispositif selon la revendication 2, caractérisé en ce que le bras de levier (15) est formé d'un court appendice, situé sur le support (10), qui s'étend vers l'extérieur au voisinage du centre de gravité du support, vers un côté du support situé à l'opposé de la caméra.
